# EUROPEAN PATENT SPECIFICATION

(11) **EP 3 007 136 B1**
(45) Date of publication and mention of the grant of the patent: **16.01.2019**
(21) Application number: 14188336.3
(22) Date of filing: 09.10.2014
(51) Int. Cl.: G06T 19/00

(54) **Apparatus and method for generating an augmented reality representation of an acquired image**
Vorrichtung und Verfahren zur Erzeugung einer Darstellung mit erweiterter Realität von einem erfassten Bild
Appareil et procédé permettant de générer une représentation en réalité augmentée d'une image acquise

(43) Date of publication of application: 13.04.2016
(73) Proprietor: Huawei Technologies Co., Ltd., Longgang District Shenzhen, Guangdong 518129 (CN)
(72) Inventor: Peuhkurinen, Antti Erik, 80992 Munich (DE)
(74) Representative: Körber, Martin Hans

(56) References cited:
- WO-A1-2011/152764
- US-B1- 8 502 835
- Seyed Hesameddin Najafi Shoushtari: "Fast 3D Object Detection and Pose Estimation for Augmented Reality Systems", PhD Dissertation, 2006, XP055193250, Retrieved from the Internet: URL:http://mediatum.ub.tum.de/doc/604471/6 04471.pdf [retrieved on 2015-06-02]
- JAYNES C O ET AL: "BUILDING RECONSTRUCTION FROM OPTICAL AND RANGE IMAGES", PROCEEDINGS OF THE 1997 IEEE COMPUTER SOCIETY CONFERENCE ON COMPUTER VISION AND PATTERN RECOGNITION. SAN JUAN, PUERTO RICO, JUNE 17 - 19, 1997; [PROCEEDINGS OF THE IEEE COMPUTER SOCIETY CONFERENCE ON COMPUTER VISION AND PATTERN RECOGNITION], LOS ALAM, vol. CONF. 16, 17 June 1997 (1997-06-17), pages 380-386, XP000776530, ISBN: 978-0-7803-4236-1
- Dirk Holz ET AL: "Real-Time Plane Segmentation Using RGB-D Cameras", Proceedings of 15th RoboCup International Symposium, 1 July 2011 (2011-07-01), pages 1-12, XP055185629, Istanbul Retrieved from the Internet: URL:http://www.ais.uni-bonn.de/papers/robo cup2011_holz.pdf [retrieved on 2015-04-23]
- Bastian Oehler ET AL: "Efficient Multi-resolution Plane Segmentation of 3D Point Clouds" In: "LECTURE NOTES IN COMPUTER SCIENCE", 1 January 2011 (2011-01-01), Springer Berlin Heidelberg, Berlin, Heidelberg, XP055088929, ISSN: 0302-9743 ISBN: 978-3-54-045234-8 vol. 7102, pages 145-156, DOI: 10.1007/978-3-642-25489-5_15, * abstract *
- MIKOLAJCZYK K ET AL: "A Comparison of Affine Region Detectors", INTERNATIONAL JOURNAL OF COMPUTER VISION, KLUWER ACADEMIC PUBLISHERS, BO, vol. 65, no. 1-2, 1 November 2005 (2005-11-01), pages 43-72, XP019216488, ISSN: 1573-1405, DOI: 10.1007/S11263-005-3848-X

## Description

### TECHNICAL FIELD

The present invention relates to the field of augmented reality representation of an acquired image in which the augmented reality representation comprises at least one artificial object.

### BACKGROUND

Current augmented reality applications can be simple systems relying on compass information to obtain information of the surroundings, or the applications may use markers placed on real surfaces to place objects on top of a camera image. Mapping techniques can be used for placing 3D objects on such markers. Research has been done in the area of markerless tracking, where objects are detected via camera sensors. Also, research in the area of reconstructing real world 3D shapes by using camera sensors for obtaining depth information has been made during past years.

Fast 3D Object Detection and Pose Estimation for Augmented Reality Systems, 2006, XP055193250, by Seyed Hesameddin Najafi Shoushtari teaches a fast and automated object detection and pose estimation system capable of working with large amounts of background clutter, occlusions, viewpoint and scale changes.

US 8 502 853 B1 teaches a system and method for simulating the placement of a virtual object relative to real world objects. A set of virtual objects (to be placed) and a set of real world object models are maintained in respective databases on a mobile computing device storing according coordinates for placing the virtual objects and 3D Model data of real world objects respectively.

A major problem in augmented reality applications is how to place partially visible artificial 3D objects over dead corners of a camera image. It is also a problem how to determine real-life shapes, which are not totally visible in the camera image, but which real-life shapes may be needed to correctly place the artificial 3D objects.

### SUMMARY

It is an object of the present invention to provide an apparatus or system, which enables a user to place artificial 3D objects in an acquired image while taking into account real-life shapes in order to correctly place the artificial objects.

The foregoing and other objects are achieved by the features of the independent claims. Further implementation forms are apparent from the dependent claims, the description and figures.

According to a first aspect, there is provided an apparatus comprising: an image obtaining unit configured to acquire an image; a display for presenting an image; and processing circuitry configured to: determine surfaces occurring in the acquired image; create virtual markers in the acquired image, each virtual marker representing an area of interest in the acquired image; map the virtual markers to the determined surfaces to derive virtually marked surfaces; map the virtually marked surfaces of the acquired image to corresponding virtually marked surfaces of a pre-calculated 3D model to derive a shape scene model; and generate, based on the acquired image and the shape scene model an augmented reality representation of the acquired image, the augmented reality representation comprising at least one artificial object.

For an artificial object being part of an augmented reality representation, one or more parts of the object may be clipped. The clipping can be based on the shape scene model, which may comprise real world surface data acquired from the pre-calculated 3D model. When clipping parts of an artificial object being part of an augmented reality representation, the resulting image may have a realistic look to an end user.

In a first possible implementation form of the apparatus according to the first aspect, the apparatus further comprises a geographical position unit configured to obtain the geographical position of the apparatus when acquiring an image. This has the advantage that the geographical position can be determined every time it is needed and does not need to be determined by an external unit.

In a second possible implementation form of the apparatus according to the first aspect as such or according to the first implementation form of the first aspect, the processing circuitry is further configured to select, based on the geographical position of the apparatus when acquiring the image, a pre-calculated 3D model with virtually marked surfaces.

The pre-calculated 3D models may represent real world 3D images being pre-processed to have recognized surfaces mapped with virtual markers, where the recognized surfaces matches the real world surfaces of the 3D images. When mapping the virtually marked surfaces of the acquired image to a pre-calculated 3D model with virtually marked surfaces, where the pre-calculated 3D model is a model of a real world image corresponding to the acquired image, the location of the virtually marked surfaces in the acquired image may be mapped or connected with the real world location of the virtually marked surfaces in the pre-calculated real world 3D model. The real world surface location information combined with the image surface location information may enable placing of artificial objects in the acquired image taking into account the real world surface data.

According to second aspect, there is provided a method for generating an augmented reality representation of an acquired image. The method comprises: acquiring an image; determining surfaces occurring in the acquired image; creating virtual markers in the acquired image, each virtual marker representing an area of interest in the acquired image; mapping the virtual markers to the determined surfaces to derive virtually marked surfaces; mapping the virtually marked surfaces of the acquired image to corresponding virtually marked surfaces of a pre-calculated 3D model to derive a shape scene model; and generating, based on the acquired image and the shape scene model, an augmented reality representation of the acquired image, the augmented reality representation comprising at least one artificial object.

### BRIEF DESCRIPTION OF THE DRAWINGS

Fig. 1 is a block diagram illustrating hardware components and processing circuitry configurations of an apparatus according to an embodiment of the invention, where the apparatus is wirelessly connected to an external data services, and where the processing circuitry configurations comprise Operating System Middleware configurations and Shape Detector System configurations;
Fig. 2 is a block diagram of processing circuitry configurations according to an embodiment of the apparatus of Fig. 1, showing different processing circuitry configurations of the Shape Detector System;
Fig. 3 is a block diagram illustrating a Virtual Marker Detector configuration being part of the Shape Detector System configurations according to an embodiment of the invention;
Fig. 4 is a block diagram illustrating a Surface Reconstructor configuration being part of the Shape Detector System configurations according to an embodiment of the invention;
Fig. 5 is a block diagram illustrating a 3D Model Database configuration being part of the Shape Detector System configurations according to an embodiment of the invention;
Fig. 6 is a block diagram illustrating a Virtual Marker Surface Creator configuration being part of the Shape Detector System configurations according to an embodiment of the invention;
Fig. 7 is a block diagram illustrating an Image Depth Enhancer configuration being part of the Shape Detector System configurations according to an embodiment of the invention;
Fig. 8 is a block diagram illustrating a Surface Connector configuration being part of the Shape Detector System configurations according to an embodiment of the invention;
Fig. 9 is a block diagram illustrating a Shape Scene configuration being part of the Shape Detector System configurations according to an embodiment of the invention;
Figs. 10a-10c illustrate creation of virtual markers in an acquired image according to an embodiment of the invention;
Figs. 11a-11d illustrate determination of surfaces occurring in an acquired image according to an embodiment of the invention;
Figs. 12a-12f illustrate derivation of a Shape Scene and generation of an augmented reality representation of an acquired image according to an embodiment of the invention;
Fig. 13 shows an original acquired image;
Fig. 14 shows the original image of fig. 13 with three artificial advertisement objects added to the image;
Fig. 15 shows an augmented reality representation of the image of Fig. 13 according to an embodiment of the invention, the augmented reality representation including two of the artificial objects of Fig. 14;
Fig. 16 shows the augmented reality representation of Fig. 15 including a third artificial advertisement object being created according to an embodiment of the invention; and
Fig. 17 shows a flow diagram of a method for generating an augmented reality representation of an acquired image according to an embodiment of the present invention.

### DETAILED DESCRIPTION OF EMBODIMENTS OF THE PRESENT INVENTION

Embodiments of the present invention provide an apparatus or a computing device system that may be used for generating an augmented reality presentation of one or more acquired images, where artificial 3D objects can be added to real video image feeds or still images acquired from a camera or image obtaining unit, so that a user may see the artificial objects naturally blended to the real image(s). This natural blend of artificial and natural elements in image(s) may enable creation of new user experiences, like new kind of advertisement and user interface possibilities.

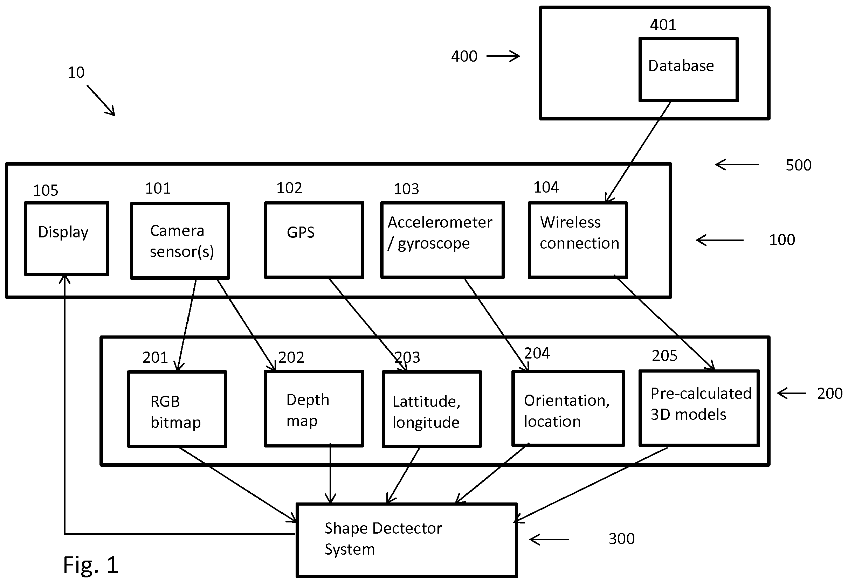

Fig. 1 is a block diagram illustrating hardware components 100 and processing circuitry configurations 200, 300 of an apparatus 10 or system according to an embodiment of the invention. The apparatus 10 may be wirelessly connected to external data services 400, such as via an internet connection 500. The apparatus 10 has a hardware device or component part 100, and a processing circuitry part with one or more processors holding Operating System Middleware configurations 200 and Shape Detector System configurations 300.

The hardware component part 100 of the apparatus 10 may hold one or more camera sensors or image obtaining units 101, a display 105 for presenting images, a geographical position unit, GPS, 102, a device or apparatus orientation unit 103, which may hold an accelerometer and/or gyroscope, and a wireless connection unit 104. The connection unit 104 collects data via the wireless connection 500 from a database 401 hold by the external data services 400.

The Operating System Middleware configurations 200 hold processing configurations for providing RGB bitmaps 201 and depth maps 202 from images acquired via the camera sensor(s) or image obtaining unit(s) 101; for providing data representing the geographical position of the apparatus 10, such as latitude and longitude data 203, based on input from the geographical position unit 102; for providing data representing the apparatus's 10 orientation and/or location 204 based on input from the orientation unit 103; and for providing pre-calculated or pre-processed real world 3D models or image data 205 being received through the wireless connection unit 104 and representing real world 3D images being pre-processed to have recognized surfaces mapped with virtual markers.

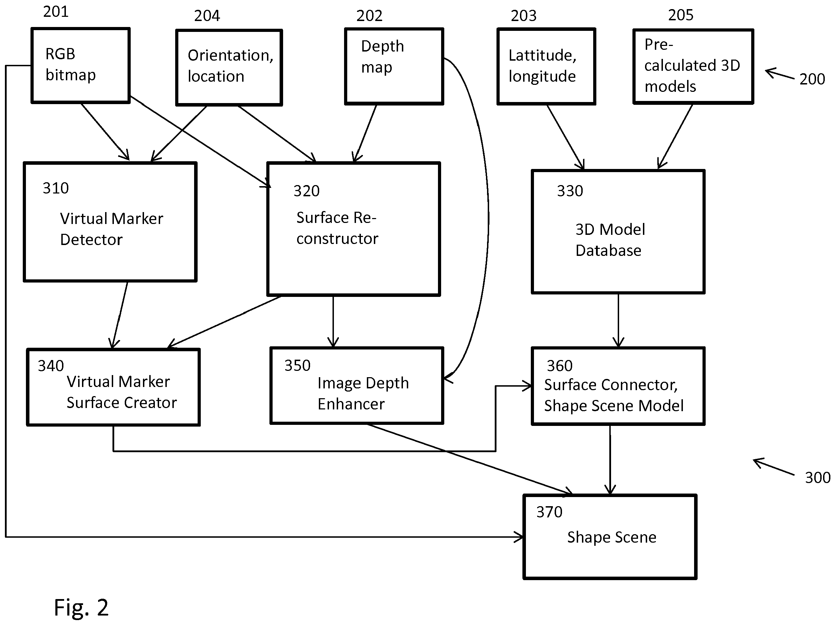

Fig. 2 is a block diagram of the processing circuitry configurations 200, 300 of the apparatus 10 of Fig. 1. The configurations of the Operating System Middleware 200 are the same as discussed in connection with Fig. 1, but Fig. 2 shows a more detailed block diagram of the processing configurations of the Shape Detector System 300, which includes:

A Virtual Marker Detector 310 for detecting points or areas of interest in an acquired image, and for placing virtual markers to the detected points or areas of interest, thereby creating virtual markers in the acquired image. A point of interest may be a point, which can be recognized from an image by well-defined computational methods, and a placed virtual marker may have a location and an orientation in space. The Virtual Marker Detector 310 may operate based on the acquired image or on RGB bitmap data 201 for the image, and may further operate based on data for the apparatus's 10 orientation and location 204 when acquiring the image.

A Surface Reconstructor 320 for determining surfaces occurring in the acquired image. The determined surfaces may be bigger atomic surfaces areas, like planar polygons, cylinder arc, spheres etc. The Surface Reconstructor 320 may operate based on the acquired image or on RGB bitmap data 201 for the image, and may further operate based on depth map data 202 for the image and on data for the apparatus's 10 orientation and location 204 when acquiring the image.

A 3D Model Database 330, which can be a local database with and a cache, which receives and stores pre-calculated 3D models or images 205 being pre-processed to have recognized surfaces mapped with virtual markers. The 3D models being used for further processing may be determined or selected based on the geographical position, such as latitude and longitude 203 of the apparatus 10 when acquiring an image.

A Virtual Marker Surface Creator 340 for mapping or connecting detected points or areas of interest being virtual marked and being output from the Virtual Marker Detector 310 to the reconstructed surfaces being output from the Surface Reconstructor 320, to thereby obtain locally created virtually marked surfaces. The data being output from Surface Creator 340 is similar to or of similar nature as the data representing pre-calculated 3D Models stored in database 330.

An Image Depth Enhancer 350 is an optional component, which may produce enhanced versions of an acquired image from the depth map data 202 by using the reconstructed surface data 320. The Image Depth Enhancer 350 may remove noise or other distracting elements from the depth image of 202.

A Surface Connector 360 for connecting or mapping the locally created virtually marked surfaces from Virtual Marker Surface Creator 340 to corresponding pre-calculated virtually marked surfaces selected from the 3D Model Database 330 to derive a Shape Scene Model for an acquired image. The mapping performed by use of the Surface Connector 360 makes it possible to have the right perspective when inserting an artificial object in an acquired image, since the combination of the locally created marked surfaces and the pre-calculated marked surfaces holds real world information for surfaces seen in the original image obtained from the pre-calculated virtually marked surfaces.

A Shape Scene 370 for combining acquired image data or RGB bitmap data 201 with the mapped surface data with virtual markers being output as a Shape Scene Model from the Surface Connector 360. The Shape Scene 370 may also combine depth map data 202 or enhanced depth map data 350 with acquired image data or RGB bitmap data 201 and the mapped surface data being output from the Surface Connector 360.

The combined data obtained by the Shape Scene 370 may be used for generating an augmented reality representation of an acquired image, where the augmented reality representation comprises one or more artificial objects being inserted in the acquired image. The augmented reality representation of the acquired image may be presented on the display 105.

The combined data obtained by the Shape Scene 370 may also be used for create or determine lighting to the artificial objects. Thus, it is preferred that the processing circuitry configuration 300 is further configured to determine lighting conditions for at least one artificial object comprised in the augmented reality presentation. Here, the processing circuitry may be configured to determine the lighting conditions based on sun light shadow mapping technique and/or ambient occlusion technique.

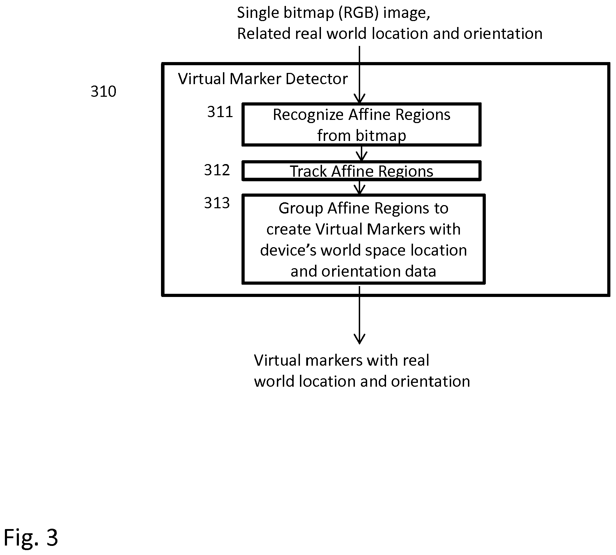

Fig. 3 is a block diagram illustrating a Virtual Marker Detector configuration 310 according to an embodiment of the invention. The Virtual Marker Detector 310 may be configured to recognize affine regions or areas of interest in the acquired image or a RGB bitmap 201 of the image 311; track affine regions or areas of interest from multiple images corresponding to the acquired image and being acquired over a time period 312; and group the tracked affine regions or areas on interest and create virtual markers with information of apparatus's location and orientation for the acquired image based on the obtained grouped affine regions 313. Virtual Marker Detector 310 may detect points of interest from the image data 311, group the points of interests found to create more robust detected areas 312, and place virtual markers to the areas 313. A Virtual marker may have a specific nature which comes from the points or areas of interest. This means that if the same area is found a second time when processing images taken from the same location, most probably a) a virtual marker is placed to the same area and b) it will have similar nature. This feature makes it possible to track specific points on image's real world shapes for example in a video stream.

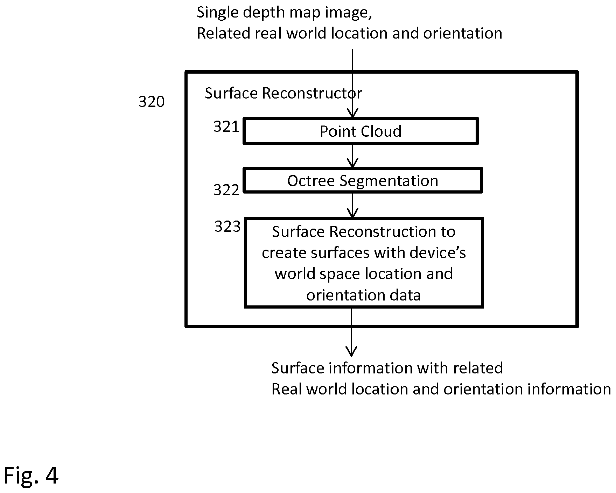

Fig. 4 is a block diagram illustrating a Surface Reconstructor configuration 320 according to an embodiment of the invention. The Surface Reconstructor 320 may be configured to create a point cloud for an acquired image based on the acquired image or a RGB bitmap 201 of the image, the depth map and the orientation and location of the apparatus when acquiring the image, and to collect point clouds of multiple images corresponding to the acquired image and being acquired over a time period 321; process the collected point clouds by use of segmentation to obtain a segmented data structure 322; and reconstruct surfaces with information of apparatus's location and orientation based on the segmented data structure 323. The segmentation 322 may be an Octree segmentation process, and the segmented data structure may be an Octree data structure.

The Surface Reconstructor 320 may create and maintain a point cloud 321 from depth map 202, orientation, location 204 and RGB bitmap data 201.The point cloud may be processed by Octree Segmentation 322. The Octree data structure may be using the same space as the point cloud 321. Octree segmentation may be used to store data from the solid shape information. Surface reconstruction 323 may be made from the octree segmentation 322. Surface reconstruction 323 may find larger atomic surfaces areas, like planar polygons, cylinder arc, sphere etc. based on the octree 322 information. The Surface Reconstructor 320 may also use other data structures that point cloud and octree data structures in the processing.

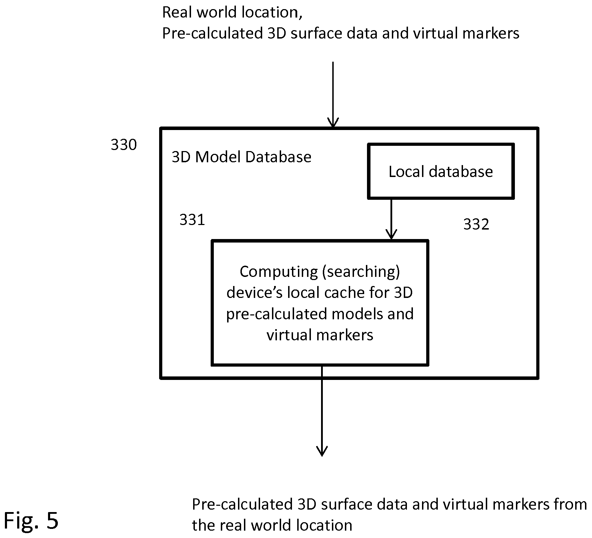

Fig. 5 is a block diagram illustrating a 3D Model Database 330 configuration according to an embodiment of the invention. The 3D Model Database 330 may comprises a local database 332 and a local cache 331, which can receive data related to the apparatus's 10 geographical position or location 203. Pre-calculated 3D model data may be received from external services 400, 401 and may be similar to or of similar nature as the data obtained from the Surface Reconstructor 320. The 3D model data has been pre-processed to have matching surfaces to real world surfaces. The 3D model data with virtual markers may be collected from cache data 331. The 3D model data can be locally stored in the local database 332, which will be faster available for the local cache 331 when compared to the external data services 400. For example local database 332 can have 3D model data from (e.g. all the) common world locations.

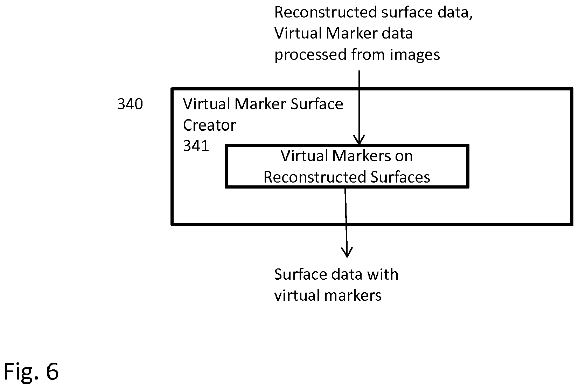

Fig. 6 is a block diagram illustrating a Virtual Marker Surface Creator 340 configuration according to an embodiment of the invention. Virtual Marker Surface Creator 340 connects information from Virtual Marker Detector 310 to the Reconstructed Surfaces 320. The end results 341 are the virtually marked surfaces. The data being output from Surface Creator 340 may be similar to or of similar nature as the data representing pre-calculated 3D Models, which may be stored in database 330, 332 or cache 331.

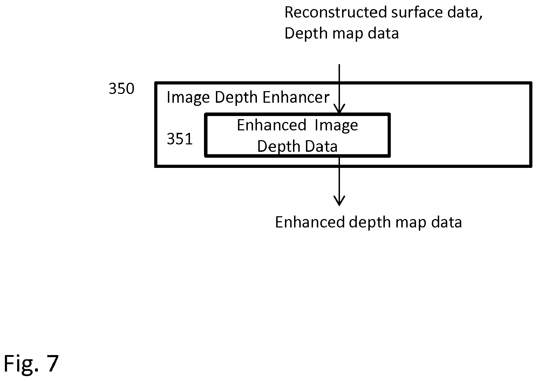

Fig. 7 is a block diagram illustrating the Image Depth Enhancer 350 configuration according to an embodiment of the invention. The Image Depth Enhancer 350 is an optional component, which can produce enhanced versions from the depth map data 202 by using the reconstructed surface data 323.

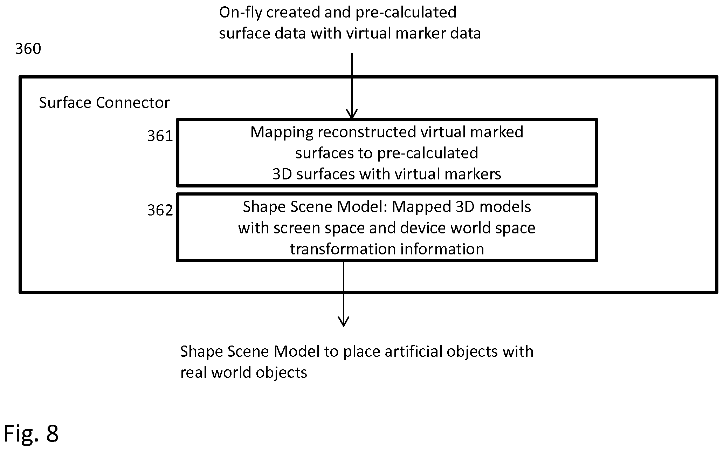

Fig. 8 is a block diagram illustrating a Surface Connector 360 configuration according to an embodiment of the invention. The Surface Connector 360 may comprise a mapping configuration 361 for mapping the locally created virtual marked surfaces from Virtual Marker Surface Creator 340 to corresponding pre-calculated virtual marked surfaces selected from the real world 3D Model Database 330. When mapping the two virtual marked surfaces, location and/or orientation of the virtual markers in the acquired image based on the locally created virtual marked surfaces are mapped or connected with the real world location and/or orientation of the virtual markers in the pre-calculated real world 3D surfaces with virtual markers. The output of the mapping configuration 361 is an application interface or Shape Scene Model 362 holding the mapped surfaces with both image and real world information of virtual marker location and/or orientation. The real world location information combined with the image location information makes it possible to know where window corners, wall corners, etc. are at the acquired image, which again enables placing of artificial objects taking into account the real world data.

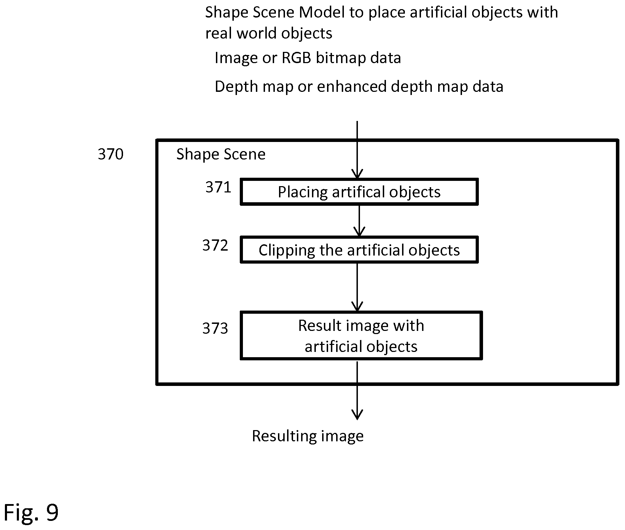

Fig. 9 is a block diagram illustrating a Shape Scene 370 configuration according to an embodiment of the invention. The Shape Scene 370 combines the mapped surfaces holding virtual marker data from the application interface or Shape Scene Model 362 with the acquired image or a RGB bitmap 201 of the image and with a depth map 202 or an enhanced depth map 350, 351. The Shape Scene 370 including real world 3D models surfaces matched to surfaces calculated from the acquired image is used for placing artificial objects in the image taking into account the real world location and/or orientation information of surfaces in the image 371. The information of the pre-calculated real-world surfaces also enables clipping of the artificial objects, if necessary, when placing these in the image 372. The resulting output is an augmented reality representation of the acquired image including one or more natural looking and arranged artificial objects.

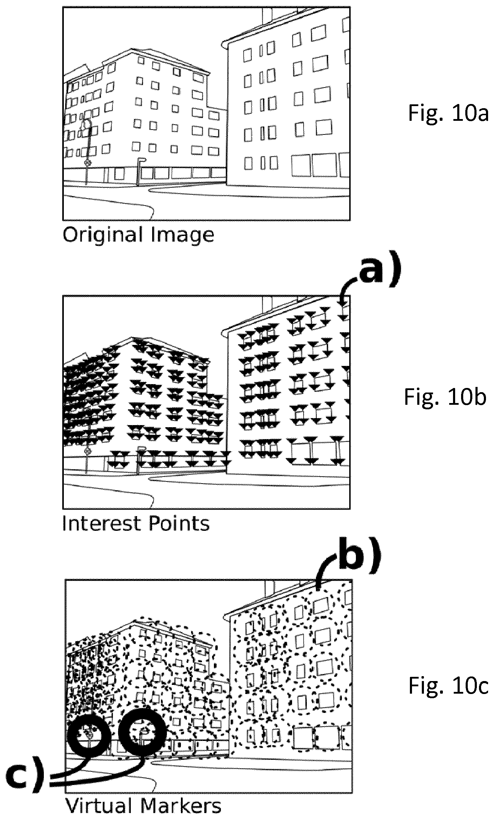

Figs. 10a-10c illustrate creation of virtual markers in an acquired image according to an embodiment. In order to create or insert virtual markers in an image, points or areas of interest may be determined. A point of interest may be a point that can be recognized from an image by some well-defined computational methods. These points of interest may be used again as an input for other computational methods to create virtual markers. A virtual marker may have a location and an orientation in the space represented by the image.

The Virtual Marker Detector 310 may be used for creating the virtual markers in the image. Fig. 10a shows as an example a bitmap representation of the original acquired image, in Fig. 10b the triangles, one of which is labelled a), represent points of interest in the acquired image, and in Fig. 10c, the dotted circles, one of which is labelled b), represent virtual markers formed at areas of interest including one or more of the points of interest, a). In Fig. 10c, the full circles labelled c) show examples of interest points which may be detected more specifically by the apparatus 10 or system of the invention because they are commonly found traffic signs, and matching to computational methods recognizing traffic signs.

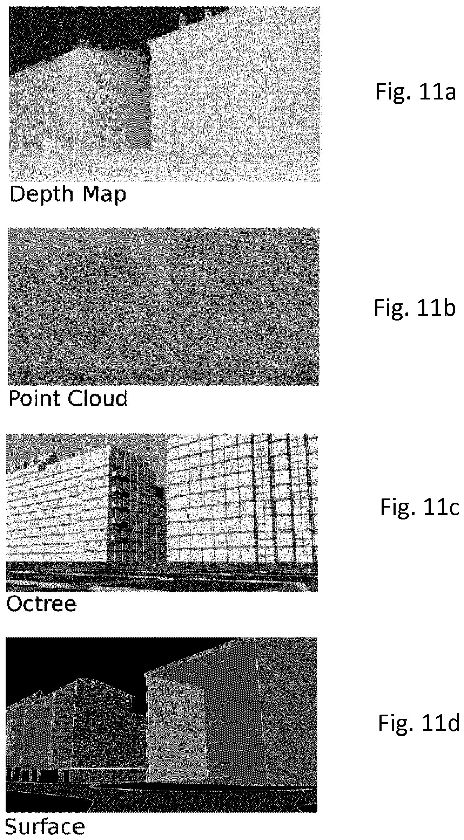

Figs. 11a-11d illustrate determination and reconstruction of surfaces occurring in an acquired image according to an embodiment of the invention. The Surface Reconstructor 320 of Fig. 4 may be used for producing the reconstructed surfaces. Fig. 11a shows a depth map presentation of the image of Fig. 10a, and camera depth map sensors 101 and the depth map configuration 202 may be used to obtain the image of Fig. 11a. The depth map presentation of Fig. 11a may be stored locally within the apparatus 10, and a point cloud database can be produced 321, see Fig. 11b. The point cloud data may be used to create an Octree database 322, see Fig. 11c, where noise from the original images is greatly reduced and strongest point cloud in space create solid forms. This Octree information is then processed to create a surface database 323, see Fig. 11d, which may contain surface shapes from the acquired image being modelled as real life surfaces.

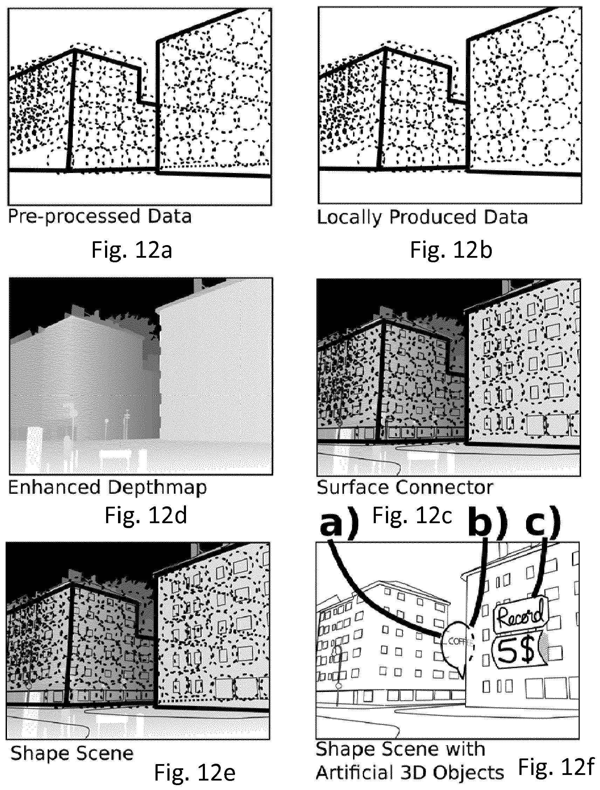

Figs. 12a-12f illustrate derivation of a shape scene and generation of an augmented reality representation of an acquired image according to an embodiment of the invention. The virtual marker image data, see Fig. 10c, and the reconstructed surface image data, see Fig. 11d, are mapped to create a Locally Produced Data, see Fig. 12b, representing locally created virtually marked surfaces. This mapping may be performed by use of the Virtual Marker Surface Creator 340. Fig. 12a is an image showing Pre-processed Data corresponding to the Locally Produced Data of Fig. 12b, where the Pre-processed Data can be obtained from the 3D Model Database 330 or from the external services 400, and a virtually marked pre-calculated 3D model corresponding to the acquired image may be selected based on the geographical position of the apparatus 10, when acquiring the image. The Pre-processed Data, Fig. 12b, obtained from the local database 330 or external services 400 may then be mapped to match the Locally Produced Data, Fig. 12a, by use of the Surface Connector 360, the output of the matching being illustrated in Fig. 12c. Here, matching may include that virtual marker location information of the real world Pre-Processed Data is connected with the virtual markers of the Locally Produced Data. This makes it possible to know where window corners, wall corners, etc. real world information are at the image data represented by the Locally Produced Data.

An Enhanced Depthmap, see Fig. 12d, can be produced by using the Locally Produced Data illustrated in Fig. 12b and the Pre-Processed Data illustrated in Fig. 12a. An enhanced depth map processing may use these two sets of data in addition to depth map data from the acquired image, 202, to create the Enhanced Depthmap. The Enhanced Depthmap obtained this way may be a more accurate presentation from a real world depth map when compared to the image depth map, 202. An enhanced image depth map may also be obtained as described in connection with the Image Depth Enhancer 350.

Fig. 12e illustrates a Shape Scene, which may be created by connecting the Surface Connector data, Fig. 12c, being output from the Surface Connector 360, with the Enchanced Depthmap data of Fig. 12d, or depth map data 202 or enhanced depth map data 350, together with the acquired image data or RGB bitmap data 201. The information comprised by the Shape Scene, Fig. 12e, 370, enables placing artificial objects in the acquired image taking into account the real world surfaces, which may include clipping part of the artificial objects, see Fig. 12f. In Fig. 12f label a) marks a first artificial object set in the middle of the image, and label c) marks a second artificial object set to the right in the image. Label b) in Fig. 12f marks an area that has been detected to be behind a real world object, which in this case is a building existing on the right side of the image. Here, a part of the artificial object a) is clipped because it is behind the real object. By use of the Shape Detector System 300, artificial 3D objects may be placed in an image scene to look for a user as being a natural part of the image.

The apparatus 10 or system described herein could be used to show advertisement for a user in a user interface of an augmented reality application. Artificial 3D advertisement could be naturally part of a camera image or camera video feed shown by the user interface. Artificial 3D advertisement can be placed and rotated in relation to objects found from the image or video stream, like the wall of a building, window glass etc.. Also real-life mimicking ambient light direction, color and fog effects could be placed to make the augmented reality 3D user interface more real. The apparatus 10 or system of the present invention could be part of for example wearable or mobile or other similar computing systems.

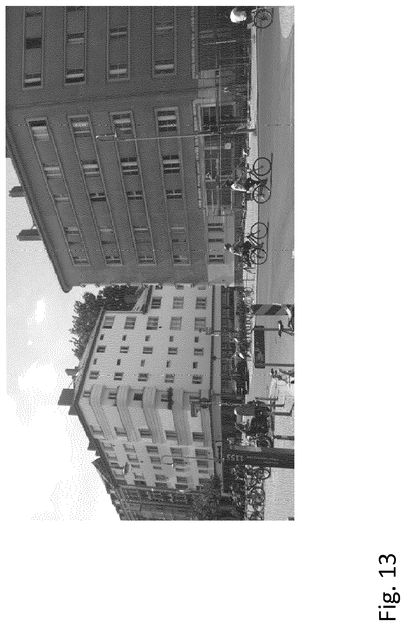

Fig. 13 shows an original acquired image, corresponding to the bitmap presentation of Fig. 10a.

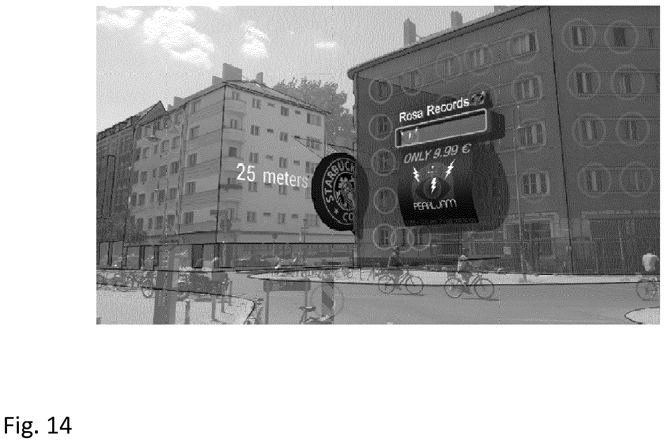

Fig. 14 shows an overlay image of the original image of Fig. 13 with a shape scene with three artificial advertisement objects according to Fig. 12f.

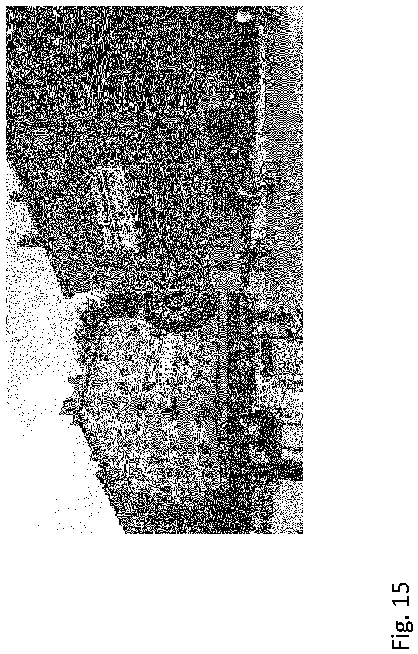

Fig. 15 shows an augmented reality representation of the image of Fig. 13, where the augmented reality representation includes two of the artificial objects of Fig. 14. In Fig. 15 the two artificial advertisement objects have been added to the acquired image using the Shape Detector System 300 of the present invention resulting in a natural looking image. Both artificial 3D objects in Fig. 15 can be seen as an advertisement to the user. The first artificial element in the middle of Fig. 15 has been clipped by the Shape Detector System 300 of the present invention so that the artificial 3D objects looks as a natural part of the image for the user. Advertisements may be personalized according to each user.

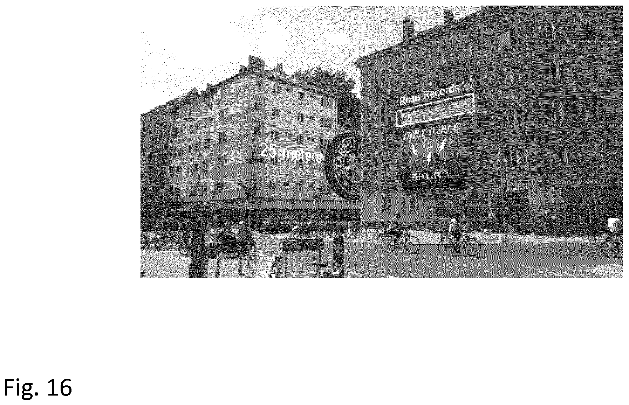

Fig. 16 shows the augmented reality representation of Fig. 15 including a third artificial advertisement object being created according to an embodiment of the invention. In Fig. 16 the second advertisement object ("Rosa Records") to the right of Fig. 15 created a new and third artificial advertisement object ("Only 9.99 €") when a user selected the second advertisement object on the right. Here, the second advertisement worked as an application. User selection could happen for example in the user interface of wearable computing glasses by having the user looking at the artificial object for a while, pointing at the artificial object with a finger or doing some gesture. More complex applications like the ones found from desktop computing devices could be arranged in a similar way.

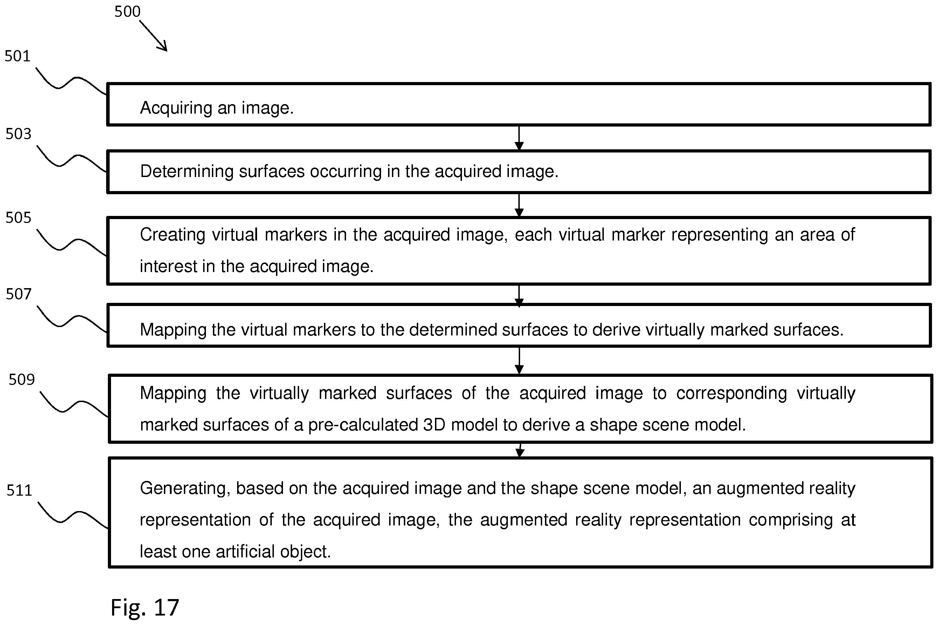

Fig. 17 shows a flow diagram of method 500 for generating an augmented reality representation of an acquired image according to an embodiment of the present invention. The method 500 may be performed by apparatuses according to embodiments of the present invention, such as the apparatus 10. The method comprises acquiring 501 an image, determining 503 surfaces occurring in the acquired image, creating 505 virtual markers in the acquired image, each virtual marker representing an area of interest in the acquired image, mapping 507 the virtual markers to the determined surfaces to derive virtually marked surfaces, mapping 509 the virtually marked surfaces of the acquired image to corresponding virtually marked surfaces of a pre-calculated 3D model 205 to derive a shape scene model 360, 362, and generating 511, based on the acquired image and the shape scene model 360, 362, an augmented reality representation of the acquired image, the augmented reality representation comprising at least one artificial object.

Although the present invention has been described with reference to specific features and embodiments thereof, it is evident that various modifications and embodiments can be made thereto without departing from the spirit and scope of the invention. The specification and drawings are, accordingly, to be regarded as an illustration of the invention as defined by the appended claims, and are contemplated to cover any and all modifications, variations, combinations or equivalents that fall within the scope of the present invention.

The term "comprising" as used in the appended claims does not exclude other elements or steps. The term "a" or "an" as used in the appended claims does not exclude a plurality.

## Claims

1. An apparatus comprising:
an image obtaining unit (101) configured to acquire an image;
a display (105) for presenting an image; and
processing circuitry (200, 300) configured to:
determine surfaces occurring in the acquired image;
create virtual markers in the acquired image, each virtual marker representing an area of interest in the acquired image;
map the virtual markers to the determined surfaces to derive virtually marked surfaces;
map the virtually marked surfaces of the acquired image to corresponding virtually marked surfaces of a pre-calculated 3D model (205) to derive a shape scene model (360, 362); and
generate, based on the acquired image and the shape scene model (360, 362) an augmented reality representation of the acquired image, the augmented reality representation comprising at least one artificial object;
**characterized in that** the processing circuitry (200, 300) is configured to
generate a depth map (202) of the acquired image;
generate an enhanced depth map for the acquired image based on the generated depth map (202) and the determined surfaces; and
to generate the augmented reality representation based on the acquired image, the generated enhanced depth map, and on the derived shape scene model (360, 362).

2. The apparatus of claim 1, further comprising a geographical position unit (102) configured to obtain the geographical position of the apparatus when acquiring an image.

3. The apparatus of claim 1 or 2, wherein the processing circuitry (200, 300) is further configured to select, based on the geographical position of the apparatus when acquiring the image, a pre-calculated 3D model (205) with virtually marked surfaces.

4. The apparatus of anyone of the claims 1 to 3, further comprising an interface (104) and a cache (331) for receiving and storing the pre-calculated 3D models (205) with virtually marked surfaces.

5. A method (500) for generating an augmented reality representation of an acquired image, the method comprising:
acquiring (501) an image;
determining (503) surfaces occurring in the acquired image;
creating (505) virtual markers in the acquired image, each virtual marker representing an area of interest in the acquired image;
mapping (507) the virtual markers to the determined surfaces to derive virtually marked surfaces;
mapping (509) the virtually marked surfaces of the acquired image to corresponding virtually marked surfaces of a pre-calculated 3D model (205) to derive a shape scene model (360, 362); and
generating (511), based on the acquired image and the shape scene model (360, 362), an augmented reality representation of the acquired image, the augmented reality representation comprising at least one artificial object;
**characterized in that** the method further comprises:
generating a depth map (202) of the acquired image;
generating an enhanced depth map for the acquired image based on the generated depth map (202) and the determined surfaces; and
generating the augmented reality representation based on the acquired image, the generated enhanced depth map, and on the derived shape scene model (360, 362).

6. A computer program comprising a program code for performing a method according to claim 5, when said computer program runs on a computer.

## Patentansprüche

1. Vorrichtung, aufweisend:
eine Bilderfassungseinheit (101), die zum Erfassen eines Bilds konfiguriert ist;
ein Display (105) zum Anzeigen eines Bilds; und
Verarbeitungsschaltungen (200, 300), die konfiguriert sind zum:
Bestimmen von Oberflächen, die im erfassten Bild auftreten;
Erzeugen von virtuellen Markierungen im erfassten Bild, wobei jede virtuelle Markierung einen relevanten Bereich im erfassten Bild darstellt;
Zuordnen der virtuellen Markierungen zu den bestimmten Oberflächen zum Ableiten von virtuell markierten Oberflächen;
Zuordnen der virtuell markierten Oberflächen des erfassten Bilds zu entsprechenden virtuell markierten Oberflächen eines im Voraus berechneten 3D-Modells (205) zum Ableiten eines Formszenenmodells (360, 362); und
Erzeugen, auf Grundlage des erfassten Bilds und des Formszenenmodells (360, 362), einer Darstellung mit erweiterter Realität des erfassten Bilds, wobei die Darstellung mit erweiterter Realität mindestens ein künstliches Objekt aufweist;
**dadurch gekennzeichnet, dass** die Verarbeitungsschaltungen (200, 300) konfiguriert sind zum:
Erzeugen einer Tiefenkarte (202) des erfassten Bilds;
Erzeugen einer erweiterten Tiefenkarte für das erfasste Bild auf Grundlage der erzeugten Tiefenkarte (202) und der bestimmten Oberflächen; und
Erzeugen der Darstellung mit erweiterter Realität auf Grundlage des erfassten Bilds, der erzeugten erweiterten Tiefenkarte und des abgeleiteten Formszenemodells (360, 362).

2. Vorrichtung nach Anspruch 1, ferner aufweisend eine geographische Positionseinheit (102), die zum Erfassen der geographischen Position der Vorrichtung beim Erfassen eines Bilds konfiguriert ist.

3. Vorrichtung nach einem der Ansprüche 1 oder 2, wobei die Verarbeitungsschaltungen (200, 300) ferner zum Auswählen, auf Grundlage der geographischen Position der Vorrichtung beim Erfassen des Bilds, eines im Voraus berechneten 3D-Modells (205) mit virtuell markierten Oberflächen konfiguriert ist.

4. Vorrichtung nach einem der Ansprüche 1 bis 3, ferner aufweisend eine Schnittstelle (104) und einen Zwischenspeicher (331) zum Empfangen und Speichern der im Voraus berechneten 3D-Modelle (205) mit virtuell markierten Oberflächen.

5. Verfahren (500) zum Erzeugen einer Darstellung mit erweiterter Realität eines erfassten Bilds, das Verfahren aufweisend:
Erfassen (501) eines Bilds;
Bestimmen (503) von Oberflächen, die im erfassten Bild auftreten;
Erzeugen (505) von virtuellen Markierungen im erfassten Bild, wobei jede virtuelle Markierung einen relevanten Bereich im erfassten Bild darstellt;
Zuordnen (507) der virtuellen Markierungen zu den bestimmten Oberflächen zum Ableiten von virtuell markierten Oberflächen;
Zuordnen (509) der virtuell markierten Oberflächen des erfassten Bilds zu entsprechenden virtuell markierten Oberflächen eines im Voraus berechneten 3D-Modells (205) zum Ableiten eines Formszenenmodells (360, 362); und
Erzeugen (511), auf Grundlage des erfassten Bilds und des Formszenenmodells (360, 362), einer Darstellung mit erweiterter Realität des erfassten Bilds, wobei die Darstellung mit erweiterter Realität mindestens ein künstliches Objekt aufweist;
**dadurch gekennzeichnet, dass** das Verfahren ferner aufweist:
Erzeugen einer Tiefenkarte (202) des erfassten Bilds;
Erzeugen einer erweiterten Tiefenkarte für das erfasste Bild auf Grundlage der erzeugten Tiefenkarte (202) und der bestimmten Oberflächen; und
Erzeugen der Darstellung mit erweiterter Realität auf Grundlage des erfassten Bilds, der erzeugten erweiterten Tiefenkarte und des abgeleiteten Formszenemodells (360, 362).

6. Computerprogramm, aufweisend einen Programmcode zum Ausführen eines Verfahrens nach Anspruch 5, wobei das Computerprogramm auf einem Computer läuft.

## Revendications

1. Appareil comprenant :
une unité d'obtention d'image (101) configurée pour acquérir une image ;
un afficheur (105) destiné à présenter une image ; et
des circuits de traitement (200, 300) configurés pour :
déterminer des surfaces apparaissant dans l'image acquise ;
créer des marqueurs virtuels dans l'image acquise, chaque marqueur virtuel représentant une zone d'intérêt dans l'image acquise ;
mettre en correspondance les marqueurs virtuels avec les surfaces déterminées afin d'en déduire des surfaces marquées virtuellement ;
mettre en correspondance les surfaces marquées virtuellement de l'image acquise avec des surfaces marquées virtuellement correspondantes d'un modèle 3D précalculé (205) afin d'en déduire un modèle de scène de forme (360, 362) ; et
générer, sur la base de l'image acquise et du modèle de scène de forme (360, 362), une représentation en réalité augmentée de l'image acquise, la représentation en réalité augmentée comprenant au moins un objet artificiel ;
**caractérisé en ce que** les circuits de traitement (200, 300) sont configurés pour générer une carte de profondeur (202) de l'image acquise ;
générer une carte de profondeur améliorée pour l'image acquise sur la base de la carte de profondeur générée (202) et des surfaces déterminées ; et
générer la représentation en réalité augmentée sur la base de l'image acquise, de la carte de profondeur améliorée générée et du modèle de scène de forme (360, 362) déduit.

2. Appareil selon la revendication 1, comprenant en outre une unité d'obtention de position géographique (102) configurée pour obtenir la position géographique de l'appareil lors de l'acquisition d'une image.

3. Appareil selon la revendication 1 ou 2, dans lequel le circuit de traitement (200, 300) est en outre configuré pour sélectionner, sur la base de la position géographique de l'appareil lors de l'acquisition de l'image, un modèle 3D précalculé (205) ayant des surfaces marquées virtuellement.

4. Appareil selon l'une quelconque des revendications 1 à 3, comprenant en outre une interface (104) et une antémémoire (331) permettant de recevoir et de stocker les modèles 3D précalculés (205) comportant des surfaces marquées virtuellement.

5. Procédé (500) pour générer une représentation en réalité augmentée d'une image acquise, le procédé comprenant :
l'acquisition (501) d'une image ;
la détermination (503) de surfaces apparaissant dans l'image acquise ;
la création (505) de marqueurs virtuels dans l'image acquise, chaque marqueur virtuel représentant une zone d'intérêt dans l'image acquise ;
la mise en correspondance (507) des marqueurs virtuels avec les surfaces déterminées pour en déduire des surfaces marquées virtuellement ;
la mise en correspondance (509) des surfaces marquées virtuellement de l'image acquise avec des surfaces marquées virtuellement correspondantes d'un modèle 3D précalculé (205) pour en déduire un modèle de scène de forme (360, 362) ; et
la génération (511), sur la base de l'image acquise et du modèle de scène de forme (360, 362), d'une représentation en réalité augmentée de l'image acquise, la représentation en réalité augmentée comprenant au moins un objet artificiel ;
**caractérisé en ce que** le procédé comprend en outre :
la génération d'une carte de profondeur (202) de l'image acquise ;
la génération d'une carte de profondeur améliorée pour l'image acquise sur la base de la carte de profondeur générée (202) et des surfaces déterminées ; et
la génération de la représentation en réalité augmentée sur la base de l'image acquise, de la carte de profondeur améliorée générée et du modèle de scène de forme (360, 362) déduit.

6. Programme d'ordinateur comprenant un code de programme destiné à mettre en oeuvre un procédé selon la revendication 5, lorsque ledit programme d'ordinateur est exécuté sur un ordinateur.
